**Europäisches Patentamt**

**European Patent Office**

**Office européen des brevets**

(19)

(11) Publication number: **0 013 793**
A1

## (12) EUROPEAN PATENT APPLICATION

(21) Application number: **79301634.6**

(51) Int. Cl.³: **B 61 B 13/14**

(22) Date of filing: **13.08.79**

(30) Priority: **12.08.78 GB 3314878**

(43) Date of publication of application: **06.08.80**
Bulletin 80/16

(84) Designated Contracting States: **CH DE FR GB SE**

(71) Applicant: **HARRIS SPEEDWALK COMPANY LIMITED,
Tourhill Industrial Estate Kilmaurs, Kilmarnock, Ayrshire
Scotland (GB)**

(72) Inventor: **Harris, Gerald, The Whitehouse Southwood
Road, Troon, Ayrshire (GB)**

(74) Representative: **Arthur, John W.,
FITZPATRICKS 14/18 Cadogan Street, Glasgow,
G2 6QW (GB)**

(54) **Pivot means for walkway.**

(57) Dual path moving walkway of the type where pallets or treadplates circulate about the terminal ends has a swivel joint connecting the inner sides to enable the pallets to move in a horizontal plane or up an incline. The swivel joint consists of overlapping links mounted at the trailing edge of one pallet and the leading edge of the adjacent pallet and interconnected by vertical pivot pin which carries a ring located in an aperture in one of the links. The outer surface of the ring and the corresponding wall of the aperture are spherical to permit relative movement in a vertical plane between the ring and the link. Consequently, the adjacent pallets can pivot relative to each other in a horizontal plane and in a vertical plane.

This invention relates to dual path moving walkways of the type where pallets or treadplates circulate about the terminal ends.

So far as is known, all existing walkways operate throughout their length in this single plane or flat configuration.

This invention extends the scope of dual path moving walkways in general and as described and claimed in our Patent Application number 6654/77 in particular to permit this type of walkway to negotiate inclines or changes of level within the limits laid down in B.S. 2655/4/1969, i.e. a maximum slope of 12 degrees and a transitional curve of 20 metres radius or whatever parameters may be specified in the future.

Thus it is an object of this invention to provide a coupling for connecting adjacent pallets such that they can circulate in a single horizontal plane for normal dual path walkways or on an incline or change of level, i.e. for a bi-planar dual path walkway.

According to the present invention there is provided a dual path moving walkway having an endless series of pallets forming the passenger-carrying floor of each path and passing around the ends of the walkway from one path to the other, means releasably locating the outer sides of adjacent pallets together when forming said floor and swivel joint connecting means coupling the inner sides of adjacent pallets permitting relative pivotal movement between adjacent pallets in a horizontal plane and in a vertical plane.

Preferably, said swivel joint connecting means com-

- 3 -

prices a pair of overlapping links each mounted on respective
leading and trailing edges of adjacent pallets in a substantially horizontal disposition and connected together by
an upright pivot member

An embodiment od the present invention will now be
described, by way of example, with reference to the accompanying drawings, in which;

Fig. 1 is a plan view of a portion of a dual path
moving walkway showing pallets moving from a straight passenger-
carrying area into a return bend, and

Fig. 2 is a fragmentary side view showing a coupling
according to the invention.

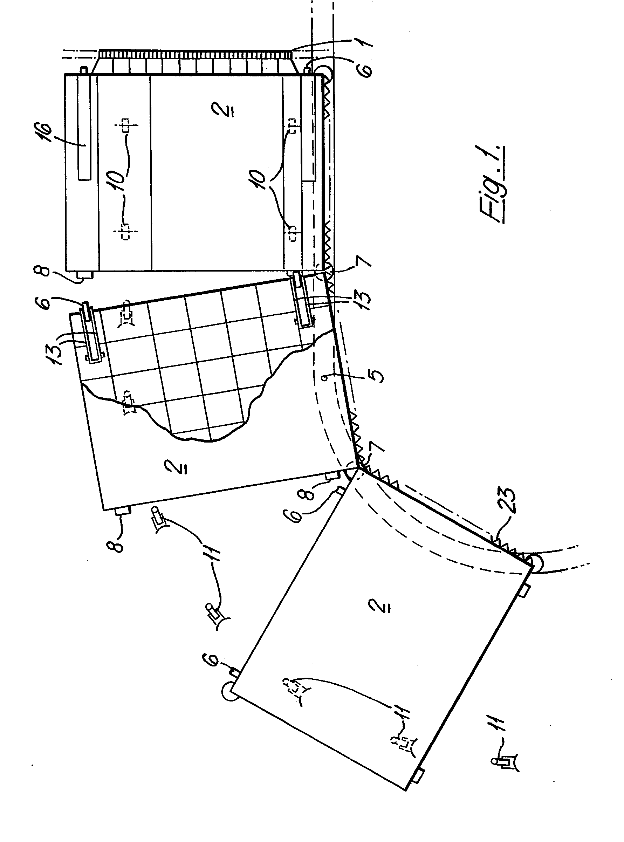

Referring to the drawings, Fig. 1 illustrates three
pallets 2 which are mounted on front and rear sets
of transport wheels 6, which are conveniently in pairs. The
pallets are connected at their inner sides by a pivotal
coupling which includes a horizontal guide wheel 7 mounted
in a guide channel 5. The pallets are releasably connected
at their outer sides by any suitable latch means such as
is described more fully in our co-pending Application
No. 33149/78         filed 12TH AUGUST, 1978

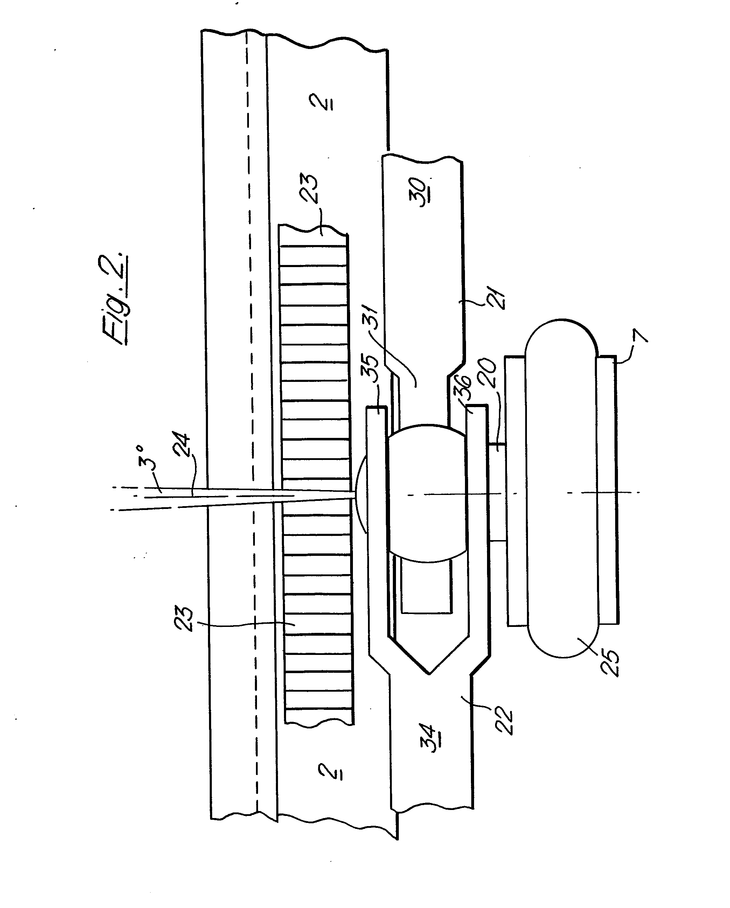

One coupling is shown in detail in Fig. 2 and is in
the form of a swivel joint comprising a pair of overlapping male
and female links 21 and 22 respectively which are each mounted
on the trailing and leading edges respectively of adjacent
pallets 2, and connected together by a pivot member 20.

The male link 21 comprises a substantially flat
plate 30 which is mounted below the trailing edge of a pallet 2

- 4 -

and a neck portion 31 which extends rearwardly beyond the
pallet. The neck portion has an aperture 32 therethrough
the axis of which is upright and the sides of which are
spherical. A ring 33 is located in said aperture 32 and has
a spherical outer face complementary with the shape of the
aperture sides.

The female link 22 has a plate 34 which is mounted
below the leading edge of the rearwardly adjacent pallet 2 and
a bifurcated end which extends forwardly beyond the pallet
and comprises horizontal upper and lower plates 35, 36. The
plates 35, 36 have co-axial apertures therethrough to receive
the upright pivot member 20, as has the ring 33 whose thickness permits it to lie between the plates 35, 36.

Thus, the swivel joint is formed by locating the ring 33
in aperture 32, locating the neck part 31 between the plates 35,
36 so that the apertures in these plates and the ring 33
coincide then locating the pivotal member 20 therethrough.
The pivot 20 holds the ring 33 firmly so that the male link 21
can move relative to it.

The links 21, 22 can then pivot about the pivot member
20 in a horizontal plane or pivot relative to each other in a
vertical plane by movement of the male link 21 relative to the
ring 33.

The pivot member 20 forms the hub of the guide wheel 7
which is provided with a substantial rib or annulus 25 to assist
maintaining the wheel 7 in the guide channel 5.

In the preferred embodiment the pallets 2 are
driven by rotary toothed members (not shown) such as rack and

0013793

- 5 -

pinion drives spaced at intervals along the lengths of the two paths which toothed bars 23 on each pallet co-operate with the rotary drive members. The toothed bars may be on the inner side of each pallet as shown in Fig. 2 or on the under side thereof with the drive member correspondingly located adjacent the inner sides of the pallets or below the pallets.

In order to accommodate the variations in the pallets' disposition relative to the horizontal, the adjacent faces of adjacent pallets are slightly upwardly divergent at sector 24 (Fig. 2) for example, forming an angle of $3^{\circ}$ when both adjacent pallets are horizontal.

On entering a transition curve the leading pallet will start to rise or fall. As the leading pallet starts to go up hill, it will pivot and toothed bars 23 of the driving means and sector 24 will close and thus the ability to articulate is limited to the size of the sector removed from the driving means. The drive is designed to accommodate this requirement, for example, the three degree arc from the centre line of the swivel joint which is used merely as an example of the type of relationship which this sector has to the transition curves.

An alternative form of drive may be by means of linear motors spaced along the paths with reaction plates on each pallet.

The pivot point 20 of the pallets 2 is arranged to be transversely co-axial with the front or rear set of transport wheels 6, in this case with the rear pair of wheels, thus ensuring that the pallets can be guided horizontally or on an incline without substantial alteration of the clearances between them

- 6 -

The latch means which releasably connects the pallets, particularly the outer sides thereof, may conveniently be the latch means 13-16 described in our co-pending Application No. 33149/78   In such an arrangement, the pivot point 20 of the pallets 2 is co-axial with the centres of the axles 15 of the pivotal transport wheels 6 when these are in the raised, latched position.   Further, if the walkway incorporates a gradient the transport wheels will negotiate it, and because they are co-axially located, neither the wheel centres nor the Bi-Planar joint centre will alter.   The side guide wheel 7 is also co-axial in the vertical plane with the swivel joint thus enabling it to negotiate the turnaround area without upsetting the axial relationship in this plane.

The toothed bars of the driving means are so arranged that the throat of the tooth form is at the lowest point where it reaches the corner of each pallet, thus it is practical to design the tooth form to permit the required articulation in the horizontal plane which occurs at the axis of every pallet as it negotiates the turnaround area.

Advantages of a walkway having swivel joint connections as hereinbefore described, are as follows:-

1) The pallets are able to turn round the terminal ends and move either horizontally or on an incline in the passenger-carrying area.

2) The walkway is able to articulate in the vertical plane as required.

3) The guide members are built with a change of direction in the vertical plane.

4)  The pallets are joined together co-axially
    so that the wheels and the articulation means
    all pivot about the common axis in the
    horizontal plane.

- 8 -

CLAIMS

1.    A dual path moving walkway having an endless series of pallets forming the passenger-carrying floor of each path and passing around the ends of the walkway from one path to the other, means releasably locating the outer sides of adjacent pallets together when forming said floor, characterised in that swivel joint connecting means (20, 21, 22) couples the inner sides of adjacent pallets permitting relative pitoval movement between adjacent pallets (2) in a horizontal plane and in a vertical plane.

2.    A walkway as claimed in Claim 1, characterised in that said swivel joint connecting means (20 to 22) comprises a pair of overlapping links (21, 22) each mounted on respective leading and trailing edges of adjacent pallets (2) in a substantially horizontal disposition and connected together by an upright pivot member (20).

3.    A walkway as claimed in Claim 2, characterised in that the overlapping links (21, 22) comprise a male link (21) located between vertically spaced plates (35, 36) of a female link (22) said male link (21) and said plates (35, 36) having co-axially aligned apertures (32), the male link aperture having spherical walls and housing a ring (33) whose external walls are correspondingly spherical, the pivot member being located through the aperture in the links (21, 22) and in the ring (33) to hold the latter firmly to permit relative movement between the ring and said male link (21).

4.    A walkway as claimed in any one of Claims 1 to 3, characterised in that the pallets (2) are mounted on front and rear transport wheels (6) and the pivot point of the pallets is co-axial with the axle centre of the front or rear transport wheel or wheels.

- 9 -

5. A walkway as claimed in Claim 4, characterised in that the said front or rear transport wheel or wheels (6) forms part of a latch means which releasably holds together adjacent pallets (2) in the passenger-carrying areas.

6. A walkway as claimed in any one of Claims 1 to 5, characterised in that each pallet includes a toothed bar (23) adapted to co-operate with rotary toothed drive means, the adjacent faces of the toothed bars on adjacent pallets (2) permitting relative alteration of the pallets in a vertical plane.

Fig.1.

_Fig.2._

0013793

0013793

| Category | Citation of document with indication, where appropriate, of relevant passages | Relevant to claim | CLASSIFICATION OF THE APPLICATION (Int. Cl. ³) |
|---|---|---|---|
| | **DOCUMENTS CONSIDERED TO BE RELEVANT** | | B 61 B 13/14 |
| | GB - A - 1 135 008 (SENYO KOGYO)<br>  * Claim 1; figures 1-7 * | 1,2 | |
| | GB - A - 906 751 (BENNDAHL)<br>  * Figures 1-3 * | 3 | |
| | DE - A - 2 252 134 (POHLIG-HECKEL-BLEICHERT)<br>  * Claim 1; figures 1,2 * | 1,6 | TECHNICAL FIELDS SEARCHED (Int.Cl. ³) |
| | DE - A - 2 109 786 (RHEINSTAHL EGGERS-KEHRHAHN)<br>  * Claims 1,2,16; figures 1,3 * | 1 | B 61 B 13/14<br>B 65 G 17/12<br>       17/38 |
| | DE - A - 945 014 (GREBE)<br>  * Claim 1; figures 1,2 * | 1,4 | |
| | FR - A - 2 319 818 (FERAG A.G.)<br>  * Figures 1-3 * | 2-4 | CATEGORY OF CITED DOCUMENTS |
| | FR - A - 2 252 268 (FMC CORPORATION)<br>  * Figures 1-4 * | 2-4 | X: particularly relevant<br>A: technological background<br>O: non-written disclosure<br>P: intermediate document<br>T: theory or principle underlying the invention<br>E: conflicting application<br>D: document cited in the application<br>L: citation for other reasons |

&: member of the same patent family, corresponding document

| The present search report has been drawn up for all claims | | |
|---|---|---|
| Place of search<br>The Hague | Date of completion of the search<br>16-11-1979 | Examiner<br>PETERS |

EPO Form 1503.1  06.78